# EUROPEAN PATENT APPLICATION

(11) **EP 4 385 769 A1**
(43) Date of publication of application: **19.06.2024**
(21) Application number: 22214263.0
(22) Date of filing: 16.12.2022
(51) Int. Cl.: B60G 11/27, F16L 55/033, B60G 17/052, F16K 47/02, B60T 17/00, G10K 11/16

(54) **STRAINING DEVICE FOR A PRESSURE CONTROL ARRANGEMENT FOR A PNEUMATIC VALVE OF AN AIR SUSPENSION SYSTEM FOR A VEHICLE, IN PARTICULAR UTILITY VEHICLE, PRESSURE CONTROL ARRANGEMENT, SILENCING ARRANGEMENT, PNEUMATIC VALVE, AIR SUSPENSION SYSTEM, AND VEHICLE, IN PARTICULAR UTILITY VEHICLE**

(71) Applicant: ZF CV Systems Europe BV, 1170 Brüssel (BE)
(72) Inventor: WYSOCKI, Pawel, 53-025 Wroclaw (PL); ZABIEGLO, Wojciech, 58-500 Jelenia Gora (PL); ZAK, Przemyslaw, 50-436 Wroclaw (PL); ZELENT, Karol, 51-311 Kielczowek (PL)
(74) Representative: Ohlendorf, Henrike

(57) **Abstract**

A straining device (30) for a pressure control arrangement (10) for a pneumatic valve (100) of an air suspension system (110) for a vehicle (200a), in particular a utility vehicle (200b) comprises a radially extending base (32), an annular protrusion (34) and an annular lip (33). The annular protrusion (34) and the annular lip (33) project oppositely, along an axial direction (A), from the radially extended base (32). The base (32) comprises an inner base portion (32a) surrounded by the annular protrusion (34) and/or the annular lip (33). The straining device (30) comprises a plurality of fluid ports (31) arranged at the inner base portion (32a), wherein the fluid ports (31) are equidistantly distributed on a circle (C1, C2).

## Description

The present invention relates to a straining device for a pressure control arrangement for a pneumatic valve of an air suspension system for a vehicle, in particular a utility vehicle. The present invention further relates to a pressure control arrangement for a pneumatic valve of an air suspension system for a vehicle, in particular a utility vehicle, to a silencing arrangement for a pneumatic valve of an air suspension system for a vehicle, in particular a utility vehicle, to a pneumatic valve of an air suspension system for a vehicle, in particular a utility vehicle, to an air suspension system for a vehicle, in particular a utility vehicle, and to a vehicle, in particular a utility vehicle.

Such a pressure control arrangement comprises a body part adapted to provide an exhaust port of a fluid channel extended along an axial direction and an annular straining device mountable to the body part, wherein the straining device comprises a fluid port for fluid communication between the exhaust port and a silencing device mountable to the body part. Therein, a pressurised fluid flows from the fluid channel through the fluid port.

The fluid port may locally reduce the speed of the pressurised fluid and may distribute the fluid flow and may thereby reduce noise which may be generated by the flow of the fluid. In the mounted state, the silencing device is arranged and adapted to fixate the arrangement of the straining device and is adapted to receive fluid flow for further noise suppression. However, a permitted maximum noise emission level may be limited to 72 dB at a pressure of 13 bar during an exhaust of pressurised air when the most emission of noise is generated by the valve.

EP 3798071 A1 discloses a pneumatic valve. The pneumatic valve comprises an inlet port for receiving pressurised fluid for facilitating control of the valve and an exhaust or a relief port for relieving the pressurised fluid when necessary and a silencer for reducing the noise generated during the operation of pneumatic valve.

WO 2015/079292 A1 discloses a lift axle control module for a motor vehicle. The module comprises a silencer for an exhaust at a bottom part.

EP 3174770 A1 discloses a device for reducing the noise of two merged concentric gas streams which join in a common outlet, the first gas stream is guided through a pipe which is surrounded by a coaxial, annular channel for guiding the second gas stream. One end of the pipe which is aligned towards the common outlet comprises crenellated recesses which are distributed on the periphery. In order to reduce the noise level of the two gas streams, which is due to the turbulence, the recesses are distributed on the periphery in an irregular manner and/or comprise an uneven axial extension and/or an irregular peripheral-related extension.

It is an object of the present invention to provide a technological contribution and to improve at least one aspect of the prior art. In particular, an object of the invention may be to provide a silencing mechanism that further reduces the emission of noise.

The object is solved by the subject-matter according to independent claim 1 and according to the remaining independent claims. Dependent claims relate to optional embodiments.

According to an aspect of the invention, a straining device for a pressure control arrangement for a pneumatic valve of an air suspension system for a vehicle, in particular a utility vehicle, is provided. Therein, the straining device comprises a radially extending base, an annular protrusion and an annular lip, and the annular protrusion and the annular lip project oppositely, along an axial direction, from the radially extended base, the base comprises an inner base portion surrounded by the annular protrusion and/or the annular lip, the straining device comprises a plurality of fluid ports arranged at the inner base portion, and the fluid ports are equidistantly distributed on a circle.

The pressure control arrangement may comprise a body part with a fluid channel. The body part and the fluid channel may be comprised by the pneumatic valve. The fluid channel may extend in an axial direction and may terminate at an exhaust port at which the fluid may flow through the fluid ports of the straining device to a silencing device. The straining device may provide a passageway for the pressurised fluid. By the fluid ports, fluid flowing through the straining device may be split up into a plurality of smaller streams which may reduce noise.

In the mounted state, the annular lip may extend along the axial direction into the fluid channel and may sealingly contact an inner surface of the fluid channel to prevent whistling noise. It is recognized that the shape of the lip seal is adapted to form a reliable sealing line between the valve body and the straining device to avoid whistling caused by fluid flow between the valve body and the straining device, since airflow in a boundary between the valve body and the straining device may be suppressed. The annular protrusion may improve mountability and a fixation of the straining device.

The inner base portion may be arranged radially inwardly from the annular protrusion and the annular lip. The inner base portion comprises a plurality of fluid ports, i.e., holes or bores, which may enable a fluid communication between the fluid channel and the silencing device. The fluid ports may be distributed on one or more circles. The arrangement of the fluid ports on the circle allows the straining device to be manufactured efficiently and provides a regular distance to a centre of the inner base portion to enable a regular distribution of air when flowing from the exhaust port via the fluid ports to the silencing device. The fluid ports may be equidistantly distributed on the circle. That is, the fluid ports may be arranged on the circle with equal distances measured on the circle and/or with equal angles between a pair of fluid ports, in particular between each adjacent pair of fluid ports. The arrangement of fluid ports achieves a particularly regular distribution of air when the air flows from the exhaust port via the fluid ports to the silencing device.

It is found that such a distribution of fluid ports may reduce the velocity of the air flow before being broken into a plurality of smaller airstreams by the fluid ports, which in consequence may reduce noise by about 17 dB compared to a valve without such a straining device. The straining device has the effect that it enables effectively fitting the straining device to the valve body and simultaneously reducing the noise level of the pneumatic valve, especially when exhausting pressurised air.

Optionally, a first subset of the fluid ports is equidistantly distributed on an outer circle and a second subset of the fluid ports is equidistantly distributed on an inner circle. The fluid ports may be arranged on two circles. Therein, one of the circles is arranged radially inwardly with respect to the other of the circles. Thus, the first subset of the fluid ports is arranged radially outwardly from the second subset of the fluid ports. This may enhance the distribution of air and breaking an inlet airflow into a plurality of outlet airflows which may reduce noise.

Optionally, each of the fluid ports is circularly shaped. The fluid ports with a circular shape, i.e., a circular cross-section, may be efficient to manufacture. Optionally, the shape of the fluid ports may be different than that of standard bores, i.e., circularly shaped.

Optionally, each of the fluid ports comprises the same diameter. That is, each pair of fluid ports comprises the same diameter. The fluid ports with the same diameter may be efficient to manufacture. In another embodiment, each of a first subset of the fluid ports may comprise a first diameter and each of a second subset of the fluid ports may comprise a second diameter being different from the first diameter.

Optionally, the number of fluid ports is in the range of 15 to 30. Therein, the number of fluid ports may balance a requirement relating to the exhaustion of pressurised air and a reduction of sound emission. It is found that 19, 21, and 24 holes enable a preferred balance, wherein 19 fluid ports may be most preferred.

Optionally, the base comprises an outer base portion radially outwardly extending from the annular protrusion and/or the annular lip. The outer base portion may enable an effective support and fixation of the straining device with the valve body and/or the silencing device. The outer base portion may further seal a boundary between a planar radially extended surface section of the valve body and the straining device and thus may further reduce noise emission. In other words, the diameter of the straining device may enhance supporting the straining device on a mesh of the silencing device and, in consequence, protect from potential movement of the straining device, which may have a direct influence on the durability of the silencing device.

According to another aspect of the invention, a pressure control arrangement for a pneumatic valve of an air suspension system for a vehicle, in particular a utility vehicle, is provided. Therein, the pressure control arrangement comprises a body part adapted to provide an exhaust port of a fluid channel extended along an axial direction, and an annular straining device as described above, wherein each of the fluid ports is adapted for fluid communication between the exhaust port and a silencing device being mountable to the body part. The straining device may comprise one or more optional features as described above the achieve a technical effect that corresponds thereto.

Optionally, a sum of a cross-sectional area of each of the fluid ports relates to a cross-sectional area of the fluid channel. For example, the sum of the cross-sectional area of each of the fluid ports is smaller than or equal to the cross-sectional area of the fluid channel. This may achieve that an inlet flow from the fluid channel may be slowed down before passing through the fluid ports at which the velocity of the airflow may increase. This may enhance noise reduction.

Optionally, the annular lip comprises a lip diameter larger than a port diameter of the exhaust port. The larger diameter of the lip seal compared to the diameter of the exhaust port, i.e., the bore for fixating the straining device in the body, and optionally in combination with an elastic material of the straining device enables an effective manufacture and sealing line which may reduce unexpected noise.

According to another aspect of the invention, a pneumatic valve of an air suspension system for a vehicle, in particular a utility vehicle, is provided. The pneumatic valve comprises the straining device as described above, the pressure control arrangement as described above and/or the silencing arrangement as described above. Therein, the pressure control arrangement and/or the silencing arrangement may comprise an optional technical feature as described above to achieve a technical effect which may correspond thereto. Therein, the straining device and/or the pressure control arrangement may comprise one or more optional features as described above to achieve a technical effect that corresponds thereto.

According to another aspect of the invention, an air suspension system for a vehicle, in particular a utility vehicle, is provided. The air suspension system comprises the straining device as described above, the pressure control arrangement as described above, the silencing arrangement as described above and/or the pneumatic valve as described above. Therein, the straining device, the pressure control arrangement and/or the pneumatic valve may comprise one or more optional features as described above to achieve a technical effect that corresponds thereto.

The straining device and the valve body may be parts of an electronic controlled air suspension smart pneumatic actuator (ECAS SPA) that is used in advanced systems of suspension control.

According to another aspect of the invention, a vehicle, in particular a utility vehicle, is provided. The vehicle, in particular utility vehicle, comprises the straining device as described above, the pressure control arrangement as described above, the silencing arrangement as described above, the pneumatic valve as described above, and/or the air suspension system as described above. Therein, the straining device, the pressure control arrangement, the pneumatic valve and/or the air suspension system may comprise one or more optional features as described above to achieve a technical effect that corresponds thereto. The vehicle, in particular utility vehicle, may comprise a brake system that comprises the pneumatic valve, the pressure control arrangement and/or the silencing arrangement.

Further advantages and technical features and their technical effects are disclosed in the figures and the description thereof.

The figures show optional embodiments as follows:
- Fig. 1: shows a schematic view of a vehicle, in particular a utility vehicle, according to an embodiment of the invention;
- Fig. 2: shows a section of a silencing arrangement according to an embodiment of the invention;
- Fig. 3: shows a detail of a section of a silencing arrangement according to an embodiment of the invention;
- Fig. 4: shows a straining device according to an embodiment of the invention; and
- Fig. 5: shows a simulation result of a velocity of pressurised air flowing through a pressure control arrangement according to an embodiment of the invention.

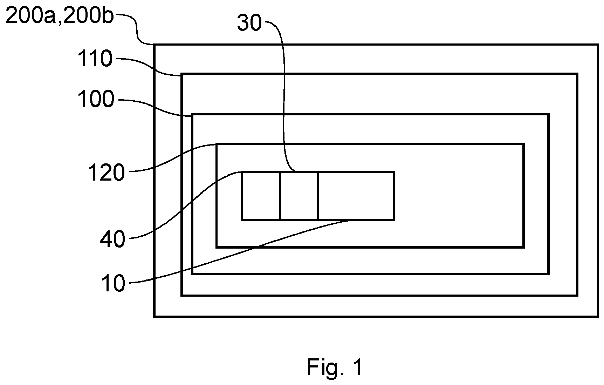

Fig. 1 shows a schematic view of a vehicle 200a, in particular a utility vehicle 200b, according to an embodiment of the invention. In the following, the vehicle 200a, in particular utility vehicle 200b, is referred to as the vehicle 200a, 200b. The vehicle 200a, 200b is a land vehicle, e.g., a truck, a trailer and/or a bus.

The vehicle 200a, 200b comprises an air suspension system 110. The air suspension system 110 is a vehicle suspension powered by an electric and/or engine-driven air pump and/or compressor (not shown).

The air suspension system 110 comprises a pneumatic valve 100 and the pneumatic valve 100 comprises a silencing arrangement 120. The silencing arrangement 120 is adapted to reduce noise and/or sound that results from a pressurised fluid 50 flowing through the pneumatic valve 100 and being released into an environment of the pneumatic valve 100. The fluid 50 is compressed air and/or a compressed gaseous fluid.

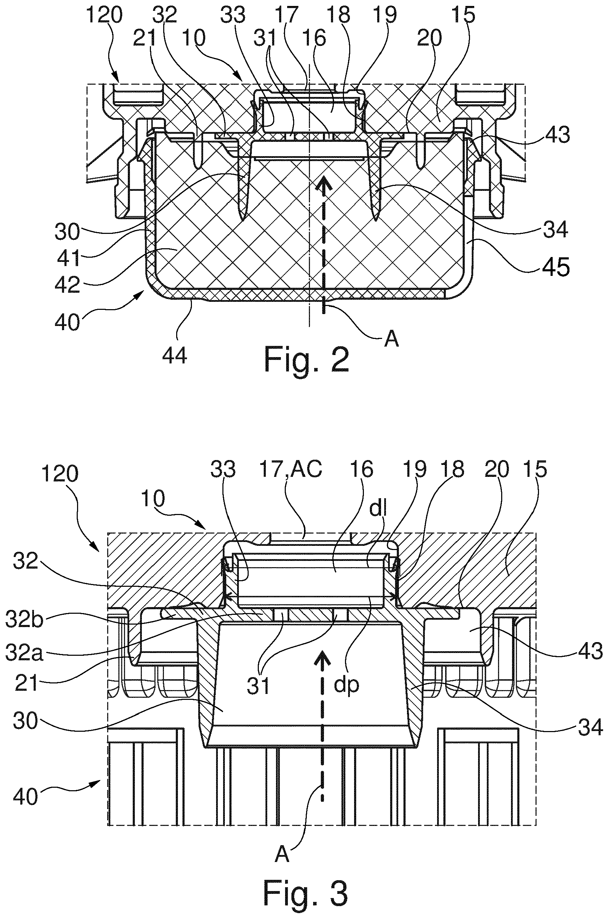

The silencing arrangement 120 comprises a pressure control arrangement 10 with a straining device 30 and a silencing device 40. The silencing arrangement 120 and the straining device 30 are described with reference to Figs. 2 to 5.

Fig. 2 shows a section of a silencing arrangement 120. The silencing arrangement 120 of Fig. 2 is described with reference to Fig. 1 and its description.

The silencing arrangement 120 as shown in Fig. 2 comprises a pressure control arrangement 10 and a silencing device 40.

The pressure control arrangement 10 comprises a body part 15 adapted to provide an exhaust port 16 of a fluid channel 17. The fluid channel 17 extends along an axial direction A.

The pressure control arrangement 10 comprises an annular straining device 30. The straining device 30 is mounted to the body part 15.

The straining device 30 comprises a plurality of fluid ports 31 for fluid communication between the exhaust port 16 and the silencing device 40 mounted to the body part 15. The fluid ports 31 and their arrangement are further described with reference to Figs. 3 to 5.

As shown in Fig. 2, the silencing device 40 comprises a housing 41 and a mesh 42. The mesh 42 is housed by the housing 41, i.e., arranged within the housing 41.

The housing 41 comprises a clip arrangement 43. The clip arrangement 43 is adapted to fixate the silencing device 40 at the body part 15. By fixating the silencing device 40 at the body part 15, an annular protrusion 34 of the straining device 30 is pressed into the mesh 42 which fixates the straining device 30. Therewith, the straining device 30 is mounted to the body part 15.

The body part 15 comprises a cylindrically-shaped inner surface section 19 forming the exhaust port 16 and a radially extended surface section 20. The straining device 30 comprises a radially extended base 32 contacting the radially extended surface section 20. The straining device 30 comprises an annular lip 33 projecting, in the axial direction A, from the radially extended base 32 towards the body part 15 and contacting an inner surface 18 of the body part 15 circumferentially. Thus, the straining device 30 and the body part 15 are sealingly connected with each other.

The housing 40 comprises a base face 44 being perpendicular to the axial direction A and a lateral face 45 being parallel to the axial direction A and circumferentially arranged around the base face 44. The lateral face 45 comprises a plurality of holes (not shown) to exhaust air from the silencing device 40.

In another embodiment (not shown), the valve body 15 and the straining device 30 may be integrally formed.

Fig. 3 shows a detail of a section of a silencing arrangement 120 according to an embodiment of the invention. The embodiment of Fig. 3 is described with reference to the embodiment of Fig. 2.

The straining device 30 comprises the radially extending base 32, the annular protrusion 34 and the annular lip 33. The annular protrusion 34 and the annular lip 33 project oppositely, along the axial direction A, from the radially extended base 32. The annular lip 33 projects from the base 32 towards the valve body 15 and the fluid channel 17. The annular protrusion 34 projects towards the silencing device 40 and into the mesh 42 (not shown in Fig. 3).

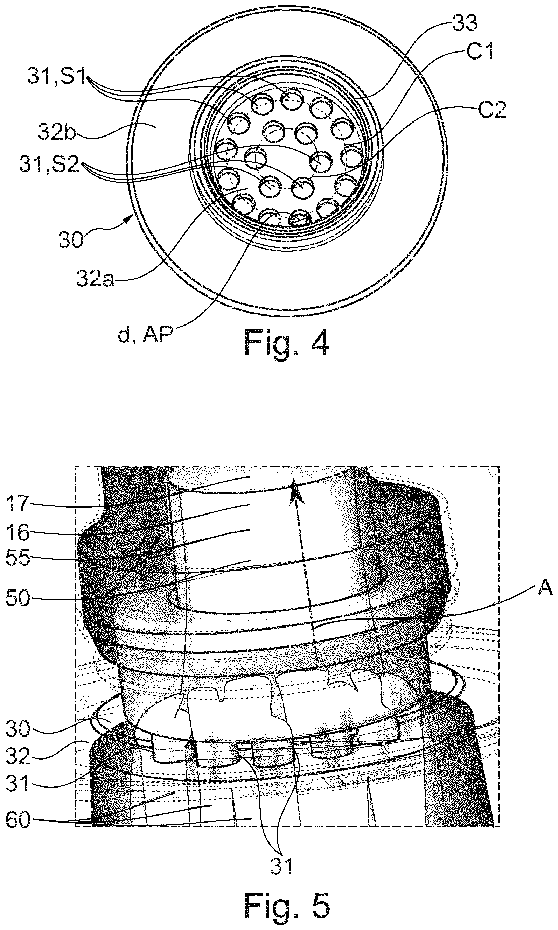

The base 32 comprises an inner base portion 32a surrounded by the annular protrusion 34 and by the annular lip 33. The plurality of fluid ports 31 is arranged at the inner base portion 32a (see also Fig. 4).

The annular lip 33 comprises a lip diameter dl larger than a port diameter dp of the exhaust port 16. Each of the lip 33 and the exhaust port 16 and/or the cylindrically-shaped inner surface section 19 comprises a circular cross section and the lip diameter dl of the annular lip 33 is, in a relaxed state of the annular lip 33, larger than the port diameter dp of the exhaust port 16. The annular lip 33 may be compressed elastically to be inserted into the exhaust port 16. By compressing the annular lip 33, the annular lip 33 fits into the exhaust port 16, and exerts, in the mounted state, an elastic force on the exhaust port 16 so as to fixate the annular lip 33 and provide a sealing line between the annular lip 33 and the exhaust port 16, i.e., the cylindrically-shaped inner surface section 19.

The base 32 comprises an outer base portion 32b radially outwardly extending from the annular protrusion 34 and the annular lip 33. The outer base portion 32b contacts the radially extended surface section 20 of the valve body 15. The outer base portion 32b sealingly contacts the radially extended surface section 20 of the valve body 15 and supports the straining device 30 on the mesh 42 (not illustrated in Fig. 3). The inner base portion 32a and the outer base portion 32b are arranged along the axial direction A in an overlapping manner, i.e., in the same plane.

The fluid channel 17 comprises a cross-sectional area AC of the fluid channel 17. E.g., the fluid channel 17 may comprise a circular cross-section defined by a diameter of the fluid channel 17 and defining the area AC of the fluid channel 17. Pressurised fluid 50 may flow through the fluid channel 17 as further described with reference to Fig. 5.

Fig. 4 shows a straining device 30 according to an embodiment of the invention. In this perspective view, the axial direction A points out of the drawing plane (not indicated). The straining device 30 of Fig. 4 is the straining device 30 as described with reference to Fig. 1 to 3. Fig. 4 is described with reference to Figs. 1 and 3.

As shown in Fig. 4, the fluid ports 31 are equidistantly distributed on two circles C1, C2. A first subset S1 of the fluid ports 31 is equidistantly distributed on an outer circle C1 as indicated with a dotted line and a second subset S2 of the fluid ports 31 is equidistantly distributed on an inner circle C2 as indicated with a dashed line.

The number of fluid ports 31 is nineteen but may be different in another embodiment (not shown), in particular in the range of 15 to 30. The first subset S1 comprises thirteen fluid ports 31 and the second subset S2 comprises six fluid ports 31.

Each of the fluid ports 31 is circularly shaped. Each of the fluid ports 31 comprises the same diameter d. The diameter d of each of the fluid ports 31 defines a cross-sectional area AP of the respective fluid port 31. The area AP of each of the fluid ports 31 relates to the diameter d. A pressurised fluid 50 may flow through each of the fluid ports 31 through each of the cross-sectional areas AP as further described with reference to Fig. 5.

A sum of a cross-sectional area AP of each of the fluid ports 31 relates to a cross-sectional area AC of the fluid channel 17. The diameters d of the fluid ports 31 are chosen so that the sum of the cross-sectional area AP of each of the fluid ports 31 is smaller than or equal to the cross-sectional AC area of the fluid channel 17.

Fig. 5 shows a simulation result of a velocity of pressurised air flowing through a pressure control arrangement 10 according to an embodiment of the invention. The pressure control arrangement 10 is described with reference to Figs. 1 to 3. The pressure control arrangement 10 comprises the straining device 30 as described with reference to Fig. 4. Fig. 5 is described with reference to Figs. 1 to 4.

As indicated by the filling of areas in the illustration of the pressure control arrangement 10, a pressurised fluid 50 may stream from the fluid channel 17 to the exhaust port 16 as an inlet flow 55. From the exhaust port 16, the fluid 50 flows in the direction of the straining device 30 and the velocity of the fluid 50 decreases when streaming from the fluid channel 17 via the exhaust port 16 towards the straining device 30. The fluid 50 may be impeded by the inner base portion 32a. The fluid 50 is split by the plurality of fluid ports 31 into a plurality of streams of an outlet flow 60, wherein each part of the outlet flow 60 corresponds to one of the fluid ports 31. When streaming through the fluid ports 31, the velocity may increase before and/or when the outlet flow 60 is guided into the mesh 42 of the silencing device 40 (not shown in Fig. 5).

Based on the simulation of the airflow, a reduction of the velocity of the air above the fluid ports 31 before breaking the airstream into smaller ones is observed. In consequence, noise is reduced by about 17 dB compared to a valve without straining device 30. In particular, the noise level is about 85 dB without the straining device 30 and about 68 dB with the straining device 30.

### Reference signs (part of the description)

- 10: pressure control arrangement
- 15: body part
- 16: exhaust port
- 17: fluid channel
- 18: inner surface
- 19: cylindrically-shaped inner surface section
- 20: radially extended surface section
- 21: body protrusions
- 25: chamfer

- 30: straining device
- 31: fluid port
- 32: base
- 32a: inner base portion
- 32b: outer base portion
- 33: annular lip
- 34: protrusion

- 40: silencing device
- 41: housing
- 42: mesh
- 43: clip arrangement
- 44: base face
- 45: lateral face

- 50: fluid
- 55: inlet flow
- 60: outlet flow

- 100: pneumatic valve
- 110: air suspension system
- 120: silencing arrangement
- 200a: vehicle
- 200b: utility vehicle

- A: axial direction
- AC: area of fluid channel
- AP: area of fluid port
- C1: first circle
- C2: second circle
- d: diameter
- dl: lip diameter
- dp: port diameter
- p: pressure

## Claims

1. Straining device (30) for a pressure control arrangement (10) for a pneumatic valve (100) of an air suspension system (110) for a vehicle (200a), in particular a utility vehicle (200b), wherein
- the straining device (30) comprises a radially extending base (32), an annular protrusion (34) and an annular lip (33), and the annular protrusion (34) and the annular lip (33) project oppositely, along an axial direction (A), from the radially extended base (32),
- the base (32) comprises an inner base portion (32a) surrounded by the annular protrusion (34) and/or the annular lip (33),
- the straining device (30) comprises a plurality of fluid ports (31) arranged at the inner base portion (32a), and wherein
- the fluid ports (31) are equidistantly distributed on a circle (C1, C2).

2. The straining device (30) as claimed in claim 1, wherein a first subset (S1) of the fluid ports (31) is equidistantly distributed on an outer circle (C1) and a second subset (S2) of the fluid ports (31) is equidistantly distributed on an inner circle (C2).

3. The straining device (30) as claimed in claim 1 or 2, wherein each of the fluid ports (31) is circularly shaped.

4. The straining device (30) as claimed in claim 3, wherein each of the fluid ports (31) comprises the same diameter (d).

5. The straining device (30) as claimed in any one of the preceding claims, wherein the number of fluid ports (31) is in the range of 15 to 30.

6. The straining device (30) as claimed in any one of the preceding claims, wherein the base (32) comprises an outer base portion (32b) extending radially outwardly from the annular protrusion (34) and/or the annular lip (33).

7. A pressure control arrangement (10) for a pneumatic valve (100) of an air suspension system (110) for a vehicle (200a), in particular a utility vehicle (200b), wherein the pressure control arrangement (10) comprises
- a body part (15) adapted to provide an exhaust port (16) of a fluid channel (17) extended along an axial direction (A), and
- an annular straining device (30) as claimed in any of the preceding claims and mountable to the body part (15), wherein each of the fluid ports (31) is adapted for fluid communication between the exhaust port (16) and a silencing device (40) mountable to the body part (15).

8. The pressure control arrangement (10) as claimed in claim 7, wherein a sum of a cross-sectional area (AP) of each of the fluid ports (31) relates to a cross-sectional area (AC) of the fluid channel (17).

9. The pressure control arrangement (10) as claimed in claim 7 or 8, wherein the annular lip (33) comprises a lip diameter (dl) larger than a port diameter (dp) of the exhaust port (16).

10. A silencing arrangement (120) for a pneumatic valve (100) of an air suspension system (110) for a vehicle (200a), in particular a utility vehicle (200b), comprising the pressure control arrangement (10) as claimed in any of claims 7 to 9 and a silencing device (40) mounted to the body part (15).

11. A pneumatic valve (100) of an air suspension system (110) for a vehicle (200a), in particular a utility vehicle (200b), comprising the straining device (30) as claimed in any one of claims 1 to 6, the pressure control arrangement (10) as claimed in any one of claims 7 to 9 and/or the silencing arrangement (120) as claimed in claim 10.

12. An air suspension system (110) for a vehicle (200a), in particular utility vehicle (200b), comprising the straining device (30) as claimed in any one of claims 1 to 6, the pressure control arrangement (10) as claimed in any of claims 7 to 9, the silencing arrangement (120) as claimed in claim 10 and/or the pneumatic valve (100) as claimed in claim 11.

13. Vehicle (200a), in particular a utility vehicle (200b), comprising the straining device (30) as claimed in any one of claims 1 to 6, the pressure control arrangement (10) as claimed in any one of claims 7 to 9, the silencing arrangement (120) as claimed in claim 10, the pneumatic valve (100) as claimed in claim 11 and/or the air suspension system (110) as claimed in claim 12.
